# EUROPÄISCHE PATENTSCHRIFT

(11) **EP 0 979 388 B1**
(45) Veröffentlichungstag und Bekanntmachung des Hinweises auf die Patenterteilung: **11.06.2003**
(21) Anmeldenummer: 98965596.4
(22) Anmeldetag: 01.12.1998
(51) Int. Cl.: G01D 5/14

(54) **MESSVORRICHTUNG ZUR BERÜHRUNGSLOSEN ERFASSUNG EINES DREHWINKELS**
MEASURING DEVICE FOR CONTACTLESS DETECTION OF A ROTATIONAL ANGLE
DISPOSITIF DE MESURE POUR LA DETECTION SANS CONTACT D'UN ANGLE DE ROTATION

(30) Priorität: 04.12.1997 DE 19753775; 29.09.1998 DE 29817399 U
(43) Veröffentlichungstag der Anmeldung: 16.02.2000
(73) Patentinhaber: ROBERT BOSCH GMBH, 70442 Stuttgart (DE)
(72) Erfinder: REICHL, Asta, D-70499 Stuttgart (DE); KLOTZBUECHER, Thomas, D-70635 Rudersberg (DE); STOEVE, Michael, D-96114 Hirschaid (DE)
(86) Internationale Anmeldenummer: DE9803525
(87) Internationale Veröffentlichungsnummer: WO99030113

(56) Entgegenhaltungen:
- EP-A- 0 611 951

## Beschreibung

### Stand der Technik

Die Erfindung geht aus von einer Meßvorrichtung zur berührungslosen Erfassung eines Drehwinkels nach der Gattung des Anspruchs 1. Aus der DE-OS 196 34 381.3 ist ein Sensor bekannt, der in drei Ebenen übereinander angeordnet ist. Der Rotor bildet die mittlere Ebene, wobei er aus der Trägerplatte für einen Permanentmagneten besteht. Die Trägerplatte selbst besteht aus nichtmagnetisch leitendem Material, so daß der Magnetfluß über die beiden anderen Ebenen, d.h. den Stator verläuft und mit Hilfe zweier Distanzstücke, die zwischen den beiden Ebenen des Stators angeordnet sind, gesteuert wird. Die Welle bzw. der Fortsatz einer Welle, die am Rotor befestigt ist, hat keinen Einfluß auf den Magnetfluß. Mit diesem Sensor ist zwar ein relativ großer Winkelbereich ohne Vorzeichenwechsel meßbar, er baut aber in Achsrichtung gesehen durch den Aufbau in drei parallelen Ebenen relativ groß.

Aus EP-A-O 611 951 ist ein ähnliches Sensor bekannt.

### Vorteile der Erfindung

Die erfindungsgemäße Meßvorrichtung zur berührungslosen Erfassung eines Drehwinkels mit den kennzeichnenden Merkmalen des Anspruchs 1 hat demgegenüber den Vorteil, daß der Sensor in Achsrichtung eine relativ kleine Größe aufweist. Er baut nur noch in zwei Ebenen. Die Trägerplatte des Permanentmagneten, die den Rotor darstellt, dient zugleich auch zur Führung des magnetischen Flusses. Ferner ist die Welle bzw. Achse auf der der Rotor sitzt in die Führung des magnetischen Flusses mit einbezogen, wodurch sich zusätzliche magnetische Flußleitstücke erübrigen. Ferner wird durch diesen Aufbau die Anzahl der Teile und der damit verbundene Montageaufwand verringert.

Der Sensor ist aufgrund seines einfachen Aufbaus mit relativ geringem Montageaufwand in verschiedenen Systemen, wie zum Beispiel einer Drosselmeßvorrichtung, eines Pedalmoduls für einen Gaspedalwertgeber integrierbar oder als eigenständiger Sensor bei Drosselklappengebern oder einer Karosserieeinfederungsvorrichtung verwendbar.

Durch die in den Unteransprüchen aufgeführten Maßnahmen sind vorteilhafte Weiterbildungen und Verbesserungen der im Anspruch 1 angegebenen Meßvorrichtung möglich.

### Zeichnung

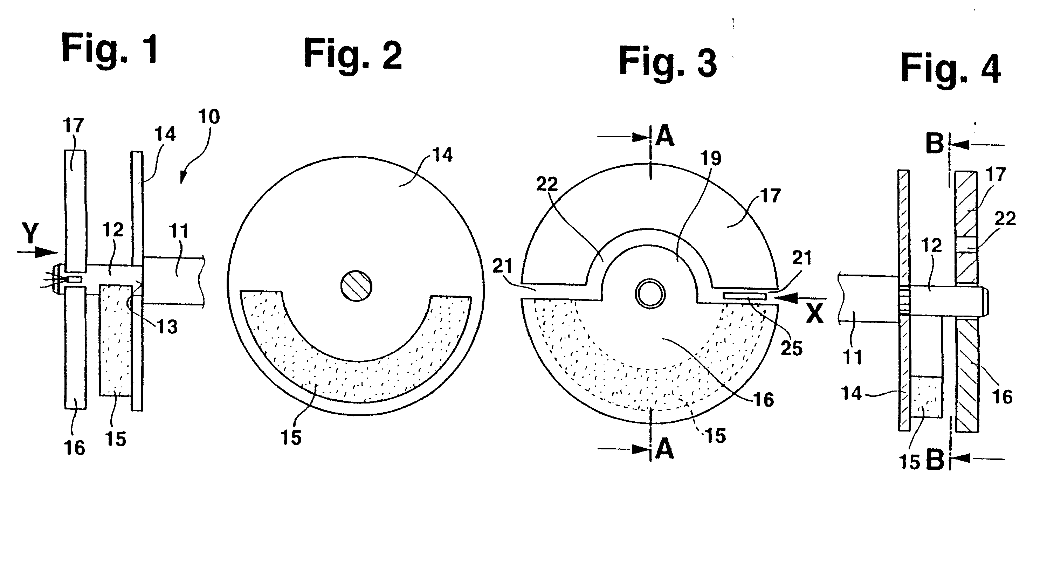

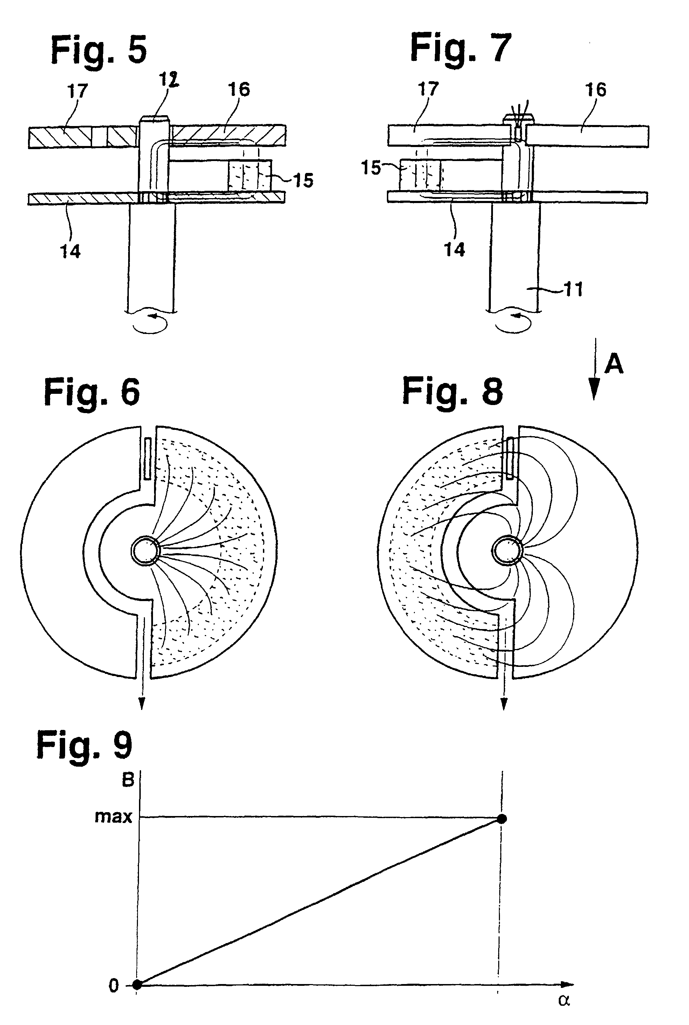

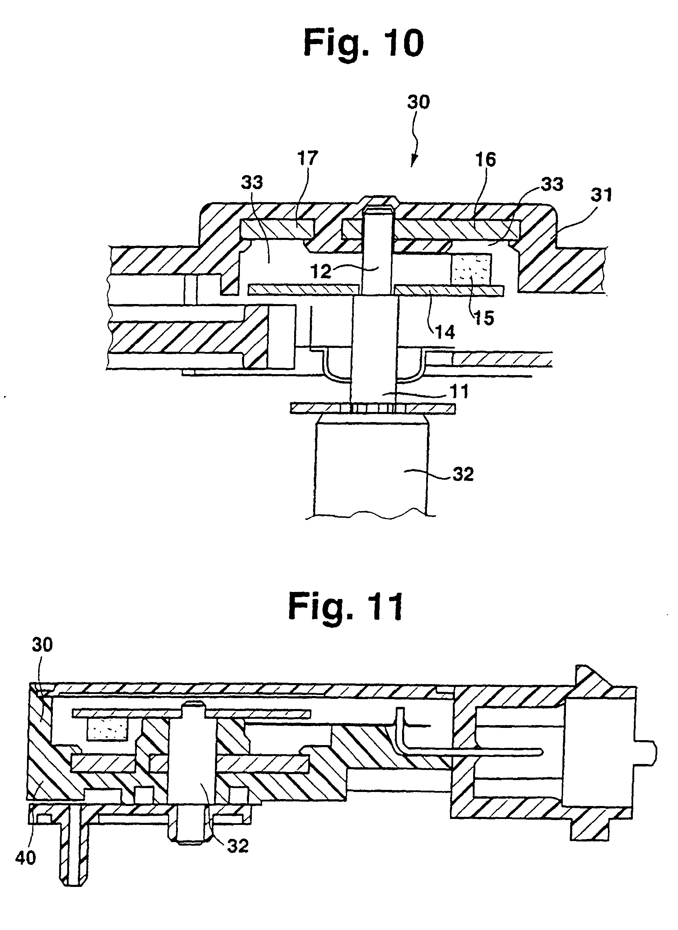

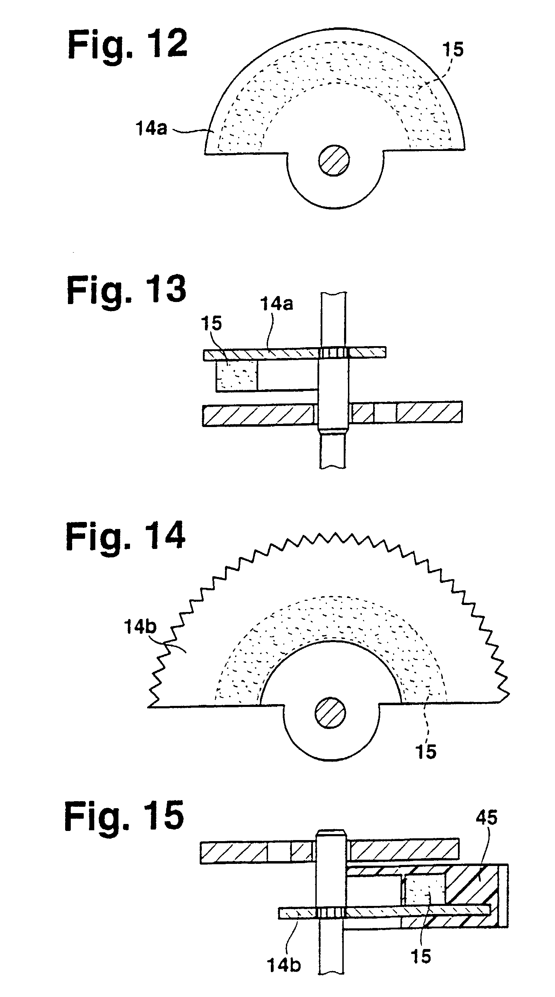

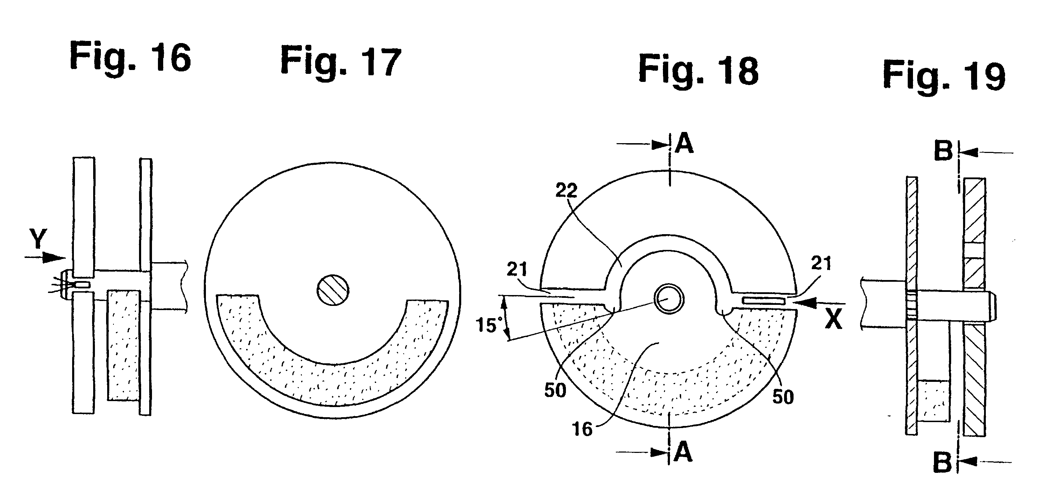

Ausführungsbeispiele der Erfindung sind in der Zeichnung dargestellt und in der nachfolgenden Beschreibung näher erläutert. Die Figuren 1 bis 4 zeigen verschiedenen Ansichten bzw. Schnitte durch ein erstes Ausführungsbeispiel. Figur 1 zeigt hierbei einen Längsschnitt in Blickrichtung X nach Figur 3, Figur 2 einen Schnitt B-B nach Figur 4, Figur 3 eine Draufsicht in Blickrichtung Y nach Figur 1 und Figur 4 einen Längsschnitt in Richtung A-A nach Figur 3. Die Figuren 5 und 6 zeigen den Magnetfluß bei einer Winkeldrehung von 0° bzw. einer Induktion B = 0, die Figuren 7 und 8 zeigen den entsprechenden Magnetfluß bei maximaler Winkeldrehung bzw. bei einer Induktion B = max, die Figur 9 zeigt den entsprechenden Verlauf der Induktion B über den Drehwinkel α. Weitere Ausführungsbeispiele, die den Einbau des Sensors in einen Drosselklappensteller bzw. einen Pedalwertgeber darstellen, sind als Längsschnitt in der Figur 10 und 11 dargestellt. Weitere Ausführungsbeispiele zeigen die Figuren 12 und 14 in Draufsicht bzw. die Figuren 13 und 15 in einem Längsschnitt. Die Figuren 16 bis 24 stellen verschiedene Abwandlungen des Ausführungsbeispiels dar.

### Beschreibung der Ausführungsbeispiele

In den Figuren 1 bis 4 ist mit 10 ein Sensor bezeichnet, der mit Hilfe einer Achse 11, mit einem nicht dargestellten Bauteil verbunden ist, dessen Drehbewegung bestimmt werden soll. An der Stirnseite der Achse 11 ist ein Fortsatz 12 angebracht, so daß eine Schulter 13 entsteht, auf der eine Trägerplatte 14 mittig aufgesetzt ist, die gleichzeitig als Rotor dient. Die Achse 11, der Fortsatz 12 und die Trägerplatte 14 können sowohl als Einzelbauteile als auch als ein einziges Bauteil hergestellt sein. Auf der Trägerplatte 14 ist möglichst mit großem radialen Abstand vom Mittelpunkt, d.h. vom Ansatzpunkt der Achse 11, ein ringförmiger Permanentmagnet 15 angeordnet. Je größer hierbei der Abstand ist, desto besser ist die Auflösung des Meßsignals. Der Permanentmagnet 15 kann als Kreisausschnitt (Kreissegment) oder Teil eines Kreisrings ausgeführt sein. Sein Winkelbereich ist mindestens so groß, wie der zu bestimmende maximale Drehwinkel des zu überwachenden bzw. des zu messenden Bauteils. Wie aus den Darstellungen in der Figur 2 bzw. 3 zu ersehen ist, beträgt der Winkelbereich des Permanentmagneten 15 bei diesem Ausführungsbeispiel 180°, so daß ein zu messender Drehwinkel von 180° erreicht werden kann. Der Permanentmagnet 15 ist ferner in Achsrichtung, d.h. senkrecht zur Trägerplatte 12 polarisiert. Die Trägerplatte 14 besteht aus magnetisch leitendem, insbesondere weichmagnetischem Material. Erfindungsgemäß besteht die Achse 11 und der Fortsatz 12 oder zumindest der Fortsatz 12 auch aus magnetisch leitendem, insbesondere weichmagnetischem Material.

In einer zweiten Ebene über dem Permanentmagneten 15 ist parallel zur Trägerplatte 14 mit einem geringen Abstand ein Stator angeordnet, der aus zwei Segmenten 16, 17 besteht. Das Segment 16 umschließt dabei mit einem Bogen 19 den Fortsatz 12. In diesem Ausführungsbeispiel ist der Bogen 19 als Kreisbogen ausgebildet. Es ist aber auch eine andere Kontur denkbar. Wesentlich dabei ist aber, daß eine magnetisch leitende Verbindung zwischen dem Fortsatz 12 und dem Segment 16 möglich ist. Der Spalt zwischen der Achse 11 und dem Bogen 19 ist deshalb möglichst gering auszubilden. Zwischen den beiden Segmenten 16, 17 ist ein durchgehender Spalt ausgebildet, der beim Ausführungsbeispiel nach den Figuren 1 bis 4 zwei gleich ausgebildete äußere Abschnitte 21 und einen mittigen, im Bereich des Bogens 19 befindlichen Distanzabschnitt 22 aufweist. Beim Distanzspalt 22 ist es wichtig, daß zwischen den Segmenten 16 und 17, d.h. bei diesem Ausführungsbeispiel im Bereich des Bogens 19, möglichst kein magnetischer Fluß der vom Permanentmagneten 15 erzeugten Magnetfeldlinien möglich ist. Der Distanzspalt 22 kann deshalb mit Luft oder einem anderen magnetisch nichtleitendem Material ausgefüllt sein. Ist der Distanzspalt 22 mit Luft gefüllt, so muß er im Verhältnis zum Spalt 21 größer ausgebildet sein, um diesen obengenannten Effekt zu erreichen. Statt Luft kann auch ein anderes, magnetisch nichtleitendes Material ausgewählt werden. Im Spalt 21 ist etwa mittig ein magnetfeldempfindliches Element 25, wie z.B. Feldplatte, Magnettransistor, Spulen, magnetoresistives Element oder ein Hall-Element angeordnet. Wichtig hierbei ist, daß das magnetfeldempfindliche Bauteil eine möglichst lineare Abhängigkeit seines Ausgangssignals von der magnetischen Induktion B aufweist. In den Figuren 1 bis 4 ist jeweils eine Messung mit Hilfe eines einzigen magnetfeldempfindlichen Elements 25, eines Hall-Elements dargestellt. In diesem Fall muß das Element 25 möglichst mittig im Spalt 21 angeordnet sein. Hingegen wäre es auch möglich, z.B. jeweils ein Element 25 in beiden Spalten 21 anzuordnen, um z.B. eine sogenannte redundante Messung (Sicherheitsmessung) durchführen zu können. Auch wäre es denkbar, in einem Spalt zwei Elemente anzuordnen. Wird, wie in der Figur 3 ersichtlich, nur in einem Spalt 21 ein magnetfeldempfindliches Element 25 angeordnet, so kann der gegenüberliegende Spalt 21 auch die Größe des Distanzspalts 22 aufweisen und somit die dem Distanzspalt 22 innehabende magnetisch nichtleitende Funktion aufweisen. Selbstverständlich ist es auch möglich, den als Meßspalt dienenden Spalt 21 nicht, wie in der Figur 3 dargestellt, symmetrisch sondern auch unsymmetrisch oder auch abgewinkelt anzuordnen. Wichtig ist dabei, daß der Spalt 21 relativ gering im Verhältnis zum Distanzspalt 22 ausgebildet ist, um einen möglichst ungestörten Fluß der Magnetlinien durch das magnetfeldempfindliche Element 25 zu ermöglichen.

In der Figur 9 ist der Verlauf der Kennlinie der magnetischen Induktion B im Element 25 z.B. einem Hall-Element über dem Drehwinkel α der Achse 11 dargestellt. Es ist erkennbar, daß bei einem Drehwinkel α von 0° die Induktion B ebenfalls Null beträgt, während sie beim maximalen Drehwinkel α auch den maximalen Induktionswert erreicht. Bei diesem Ausführungsbeispiel ist der maximale Drehwinkel bei 180° erreicht. Die Stellung des Sensors 10 bei einem Drehwinkel von 0° ist in den Figuren 5 und 6 dargestellt. Es ist ersichtlich, daß der Magnetfluß vom Permanentmagneten 15 über den geringen Spalt, der zur Beweglichkeit des Rotors gegenüber dem Stator dient, zum Segment 16, von dort über den geringen Lagerungsspalt zum Fortsatz 12 und von dort über die Trägerplatte 14 zurück zum Permanentmagneten 15 führt. Wie insbesondere aus der Figur 6 ersichtlich ist, ist der Magnetfluß so gesteuert, daß er bei einem Drehwinkel von 0° nicht durch das Element 25 verläuft, so daß im Element 25 keine magnetische Induktion B erfolgen kann. Wird nun die Achse 11 und somit die Trägerplatte 14 mit dem Permanentmagneten 15 gedreht, so wird der durch das Element 25 verlaufende magnetische Fluß vergrößert, und es ergibt sich die in der Figur 9 dargestellte lineare Meßlinie. Die Einstellung bei maximalem Drehwinkel α ist in der Figur 7 bzw. 8 dargestellt. Die Figur 7 ist eine Ansicht in Blickrichtung A auf die Figur 8. In der Stellung des maximalen Drehwinkels α verläuft der gesamte Magnetfluß des Permanentmagneten 15 über den geringen Spalt in das Segment 17. Von dort fließt der Magnetfluß durch den einen Spalt 21 in das Segment 16 und ein auf der gegenüberliegenden Seite über den anderen Spalt 21 zurück durch den Lagerungsspalt in den Fortsatz 12 und von dort über die Trägerplatte 14 zum Permanentmagneten 15. Insbesondere aus der Figur 8 ist ersichtlich, daß beim Passieren des Spalts 21 nahezu der gesamte Magnetfluß durch das Element 25 geführt wird und dadurch im Element 25 eine maximal mögliche magnetische Induktion B bewirkt wird. Aus der Figur 8 ist ferner ersichtlich, daß durch den Distanzspalt 22 ein nahezu vollständiger Verlauf der Magnetlinien über den Spalt 21 und somit durch das Element 25 bewirkt wird. Es darf möglichst kein Magnetfluß über den Distanzspalt 22 erfolgen.

Im Ausführungsbeispiel nach der Figur 10 ist der Einbau des oben beschriebenen Sensors in eine Drosselklappenstelleinheit 30 dargestellt. Mit Hilfe dieser Einheit 30 wird der Drehwinkel einer Drosselklappe für eine Motorsteuerung erfaßt. Hierbei sind die Segmente 16, 17 des Stators direkt im Deckel 31 der Drosselklappenstelleinheit 30 angeordnet. Da der Deckel 31 aus Kunststoff besteht, können die Segmente 16, 17 in den Deckel 31 mit eingespritzt werden. Es wäre aber auch möglich, die beiden Segmente 16, 17 des Stators in den Deckel 31 einzuklipsen. Selbstverständlich muß dabei aber ein Spalt 33 vorhanden sein, der einen magnetischen Fluß vom Permanentmagneten 15 zu den Segmenten 16 bzw. 17 ermöglicht. In einem Spalt 33, der in der Figur 10 nicht ersichtlich ist, befinden sich wiederum das eine oder die beiden Elemente 25. Die Achse 11 ist hierbei direkt auf der Welle 32 der Drosselklappe befestigt oder stellt einen Fortsatz dieser Welle 32 dar. Die als Rotor dienende Trägerplatte 14 mit dem Permanentmagneten 15 ist somit direkt auf der Welle 32 der Drosselklappe befestigt. Ohne große Änderungen kann der Sensor nach den Figuren 1 bis 4 bzw. 12 bis 15 in eine Drosselklappenstelleinheit 30 eingebaut werden. Hierbei kann in einfacher Weise das z.B. bisher verwendete Potentiometer ausgetauscht werden. Die Figur 11 stellt einen Pedalwertgeber dar. In der Figur 11 sind die Segmente 16, 17 des Stators in den Boden 40 der Einheit 30a angeordnet. Die Segmente 16, 17 können auch hier wieder in den Boden 40 eingegossen oder eingeklipst werden. Der Fortsatz der Welle 32 ragt somit durch den Stator hindurch und die als Rotor dienende Trägerplatte 14 ist am Ende der Achse 32 befestigt. Somit ist entsprechend den Figuren 10 und 11 der Sensor entsprechend den Ausführungen der Figuren 1 bis 4 bzw. 12 bis 15 den baulichen Gegebenheiten der Drosselklappenstelleinheit 30 bzw. des Pedalwertgebers anpaßbar.

Beim Ausführungsbeispiel nach den Figuren 12 und 13 ist die Trägerplatte des Sensors keine Vollscheibe mehr. Es reicht aus, wenn die Trägerplatte 14a als Segment ausgebildet ist, das einen Winkelbereich entsprechend der Größe des Permanentmagneten 15 aufweist. In der Figur 12 ist bezogen auf die Figuren 1 bis 4 ein Permanentmagnet mit einem Winkelbereich von 180° dargestellt. Somit hat die Trägerplatte 14a auch einen Winkelbereich von etwa 180°. Die Außenkontur dieser als Segment ausgebildeten Trägerscheibe 14a kann beliebig ausgebildet sein. So ist z.B. in den Figuren 14 und 15 das Trägersegment 14b als Zahnradsegment ausgebildet. Wie insbesondere aus der Figur 15 ersichtlich ist, ist das Zahnradsegment 45 an die Trägerscheibe 14b angespritzt, wobei das Zahnradsegment 45 auch den Permanentmagneten 15 mit umgibt. Mit Hilfe des aus nicht magnetisch leitendem Material hergestellten Zahnradsegments kann gleichzeitig eine Antriebskraft auf die Trägerplatte eingeleitet werden. Dadurch ist eine Integrierung in einen Antrieb und somit eine sehr kompakte Bauweise möglich.

Im Ausführungsbeispiel nach den Figuren 16 bis 19 ist in der Figur 18 erkennbar am Übergang des Spalts 22 zu den beiden Spalten 21 jeweils eine Ausnehmung 50 ausgebildet. Die Ausnehmungen 50 stellen dabei eine Verlängerung des Spalts 22 dar, die in das Segment 16 des Stators hineinragt. Die Ausnehmungen 50 sind in der Figur 18 bogenförmig dargestellt. Es ist aber auch eine andere Form denkbar. Wichtig ist dabei, daß die Ausnehmungen 50 mindestens 15° in das Segment 16 hineinragen. Bei einer bogenförmigen Ausgestaltung stellen die Seitenkanten der Ausnehmung 50 eine Verlängerung des Spalts 22 dar, die mit einem Kreisbogen abgeschlossen sind. Die Ausnehmungen 50 behindern relativ stark den magnetischen Streufluß des Permanentmagneten 15. Dadurch wird der Streufluß am Übergang vom Spalt 22 zu den beiden Spalten 21 minimiert, wodurch das Ausgangssignal in seiner Linearität weiterhin verbessert wird. Aufgrund der Ausnehmungen 50 ist es möglich, den als Distanzspalt dienenden Spalt 22 gegenüber den vorherigen Ausführungsbeispielen zu verkleinern und somit die Baugröße des Sensors zu reduzieren. Um eine optimale Ausnutzung des magnetischen Flusses zu erreichen, sollte die Fläche der Segmente 16 und 17, die sich im Bereich der beiden Spalten 21 gegenüberliegen, annähernd gleich groß sein. Die Ausnehmungen 50 sollten, wie der Spalt 22 bei diesen oder bei den vorherigen Ausführungsbeispielen, mit Luft gefüllt sein oder als magnetisch nicht leitendes Distanzstück mit entsprechender Materialzusammensetzung ausgefüllt sein. Wesentlich für das Größenverhältnis zwischen dem Spalt 21 und dem Spalt 22 bzw. der Ausnehmung 50 ist, daß der Spalt 22 und die Ausnehmungen 50 im Verhältnis viel größer sind, als die beiden Spalte 21, so daß über den Spalt 22 und die Ausnehmungen 50 kein magnetischer Fluß des Permanentmagneten 15 möglich ist und somit dieser magnetische Fluß nahezu vollständig über die beiden Spalte 21 verläuft. Wie in der Figur 18 dargestellt und bei den vorherigen Ausführungsbeispielen erwähnt, ist es möglich, daß nur ein magnetfeldempfindliches Element 25 in einem Spalt 21 vorhanden ist. Hierbei ist es denkbar, den diametral gegenüberliegenden Spalt in der selben Größenordnung auszubilden, wie den Spalt 21 mit dem magnetfeldempfindlichen Element 25. Es ist aber auch denkbar, diesen nicht mit einem magnetfeldempfindlichen Element 25 ausgefülltem Spalt 21 in der Größenordnung des Spalts 22 und somit als Distanzspalt auszubilden. Hierbei kann er, wie erwähnt, die Größenordnung des Spalts 22 aufweisen und/oder zusätzlich mit magnetisch nicht leitendem Material bzw. Luft gefüllt sein. In den Figuren ist der Spalt 21 mit dem magnetfeldempfindlichen Element 25 als radial nach außen verlaufender Spalt dargestellt. Es wäre aber auch denkbar, daß dieser Meßspalt abgewinkelt oder unsymmetrisch ausgebildet ist.

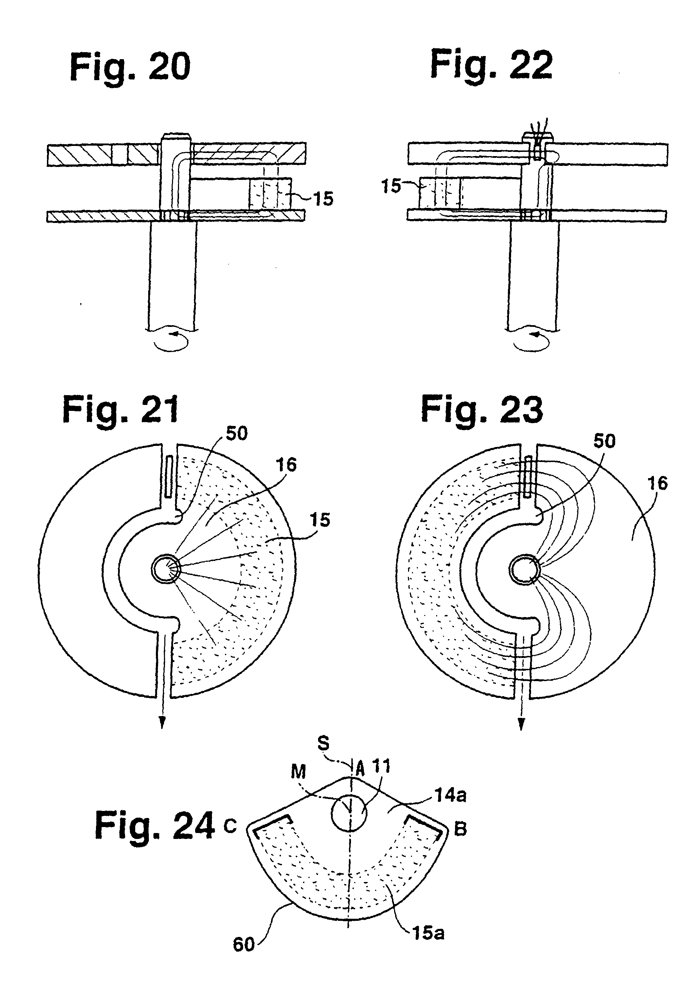

In den Figuren 20 bis 23 ist nun der magnetische Fluß bei den Drehwinkelstellungen α = 0 Grad und α = Maximaler Drehwinkel korrespondierend zu den Figuren 5 bis 9 dargestellt. Es ist aus den Figuren 20 und 21 ersichtlich, daß auch aufgrund der Ausnehmungen 50 der magnetische Fluß des Permanentmagneten 15 in das Innere des Segments 16 hin behindert wird, so daß bei der Winkelstellung α = 0 Grad die Induktion B ebenfalls Null beträgt und durch kaum einen Streufluß verfälscht wird. Hingegen wird in den Figuren 22 und 23 bei maximalem Drehwinkel α auch der maximale Induktionswert B = Max erreicht. Aufgrund der Ausnehmungen 50 wird auch hier ein Streufluß verhindert, der am magnetfeldempfindlichen Element 25 vorbei verlaufen würde.

Somit wird nahezu der gesamte magnetische Fluß über das bzw. die magnetfeldempfindlichen Elemente geleitet. In der Figur 24 ist eine Abwandlung des Rotors 14a dargestellt. Aufgrund der Geometrie des Rotors 14a wird die Linearität der Kennlinie des Sensors über den Meßbereich von 140 Grad wesentlich verbessert. Der magnetische Streufluß des Permanentmagneten 15a wird minimiert und demzufolge weist der Nullpunkt der Meßkurve des Sensors eine hohe Temperaturstablilität auf. Wie aus der Figur 24 ersichtlich, stellt der Rotor 14a ein Kreissegment dar, das im Gegensatz zu dem Rotor 14 der bisherigen Ausführungsbeispiele einen Winkel von < 180° aufweist. Der Rotor 14a muß hierbei die Achse 11 umgreifen. Der zwischen den Punkten C und B liegende kreisförmige Abschnitt 60 des Rotors 14a hat seinen Mittelpunkt im Mittelpunkt M der Welle 11. Ferner verläuft durch den Mittelpunkt M eine Linie S. Zu dieser Linie S ist der Rotor 14a spiegelbildlich ausgebildet. Dies bedeutet, daß eine Verbindung des Punktes C mit einem Punkt A, der auf der Linie S liegt, und eine Verbindung des Punktes B mit diesem Punkt A jeweils den gleichen Winkel zur Linie S aufweist. Der Punkt A befindet sich auf der der Kreisbogenform 60 gegenüberliegenden Seite des Rotors 14a. Im Bereich der Punkte A, B und C muß der Rotor 14a abgerundete Kanten aufweisen. Die Größe des Winkels des Rotors 14a ist abhängig vom verwendeten Magnetsegment 15a. Es muß gewährleistet sein, daß der Winkelbereich des Rotors 14a gleich oder größer als der verwendete Magnet ist.

## Patentansprüche

1. Meßvorrichtung zur berührungslosen Erfassung eines Drehwinkels (α) zwischen einem Stator (16, 17) und einem Rotor (14), wobei auf dem Rotor (14) ein Permanentmagnet (13) angeordnet ist, wobei sich zwischen Stator (16, 17) und Rotor (14) ein Luftspalt befindet und der Stator aus mindestens zwei Segmenten (16, 17) besteht, die durch mindestens zwei magnetisch nicht leitende Spalte (21, 22) getrennt sind, wobei sich in mindestens einem Spalt (21) mindestens ein magnetfeldempfindliches Element (25) befindet, wobei mindestens ein Teil (17) des Stators keine magnetisch leitende Verbindung mit dem Rotor (14) aufweist, **dadurch gekennzeichnet, daß** die Achse (11) des Rotors (14) mindestens einen Bereich aus magnetisch leitendem Material aufweist, der mindestens vom Rotor (14) zu dem Teil (16) des Stators verläuft, das eine magnetisch leitende Verbindung mit dem Rotor (14) aufweist, und daß mindestens ein erster Spalt (22) zwischen den beiden Teilen (16, 17) des Stators vorhanden ist, der den Magnetfluß des Permanentmagneten (15) behindert und so steuert, daß er über mindestens einen der anderen Spalte (21) verläuft, in dem sich mindestens ein magnetfeldempfindliches Element befindet.

2. Meßvorrichtung nach Anspruch 1, **dadurch gekennzeichnet, daß** der erste Spalt (22) größer als der andere Spalt (21) ist.

3. Meßvorrichtung nach Anspruch 1 und/oder 2, **dadurch gekennzeichnet, daß** die Welle (11), insbesondere der Fortsatz (12), und der Rotor (14) aus weichmagnetischem Material bestehen.

4. Meßvorrichtung nach einem der Ansprüche 1 bis 3, **dadurch gekennzeichnet, daß** ein Teil (16) des Stators einen Fortsatz (19) aufweist, in den die Achse (11), insbesondere deren Fortsatz (12), ragt.

5. Meßvorrichtung nach Anspruch 4, **dadurch gekennzeichnet, daß** der Fortsatz (19) des Teils (16) des Stators bogenförmig ausgebildet ist.

6. Meßvorrichtung nach einem der Ansprüche 1 bis 5, **dadurch gekennzeichnet, daß** der Rotor und der Stator scheibenförmig ausgebildet sind.

7. Meßvorrichtung nach einem der Ansprüche 1 bis 6, **dadurch gekennzeichnet, daß** der Rotor als Segment ausgebildet ist.

8. Meßvorrichtung nach einem der Ansprüche 1 bis 7, **dadurch gekennzeichnet, daß** zwei andere Spalte (21) vorhanden sind, in denen jeweils mindestens ein Hall-Element (25) angeordnet ist.

9. Meßvorrichtung nach einem der Ansprüche 1 bis 8, **dadurch gekennzeichnet, daß** die Achse (11) und der Rotor (14) einteilig ausgebildet sind.

10. Meßvorrichtung nach einem der Ansprüche 1 bis 9, **dadurch gekennzeichnet, daß** am Übergang vom ersten Spalt (21) zum anderen Spalt (22) im Teil (16) des Stators mindestens eine Ausnehmung (50) ausgebildet ist.

11. Meßvorrichtung nach einem der Ansprüche 1 bis 10, **dadurch gekennzeichnet, daß** der erste Spalt (22), der andere Spalt (21) und die Ausnehmung (50) mit Luft oder einem magnetisch nicht leitenden Stoff gefüllt sind.

12. Meßvorrichtung nach einem der Ansprüche 1 bis 11, **dadurch gekennzeichnet, daß** die mindestens eine Ausnehmung (50) eine Eindringtiefe von ≥ 15° hat.

13. Meßvorrichtung nach einem der Ansprüche 1 bis 12, **dadurch gekennzeichnet, daß** die Breite des anderen Spalts (21) kleiner als die Breite der Ausnehmung (50) ist.

14. Meßvorrichtung nach einem der Ansprüche 1 bis 13, **dadurch gekennzeichnet, daß** die Breite der Ausnehmung (50) der Breite des ersten Spalts (22) entspricht.

15. Meßvorrichtung nach einem der Ansprüche 1 bis 14, **dadurch gekennzeichnet, daß** die Ausnehmung (50) eine Kreisform aufweist.

16. Meßvorrichtung nach einem der Ansprüche 1 bis 15, **dadurch gekennzeichnet, daß** ein anderer Spalt (21) mit mindestens einem magnetfeldempfindlichen Element (25) vorhanden ist und der übrige sich zwischen den beiden Teilen (16, 17) des Stators befindende Spalt (22) größer als der andere Spalt (21) ausgebildet ist.

17. Meßvorrichtung nach einem der Ansprüche 1 bis 16, **dadurch gekennzeichnet, daß** am Übergang vom anderen Spalt (21) zum Spalt (22) eine erste Ausnehmung (50) vorhanden ist, und daß diametral gegenüberliegend eine zweite Ausnehmung (50) ausgebildet ist.

18. Meßvorrichtung nach einem der Ansprüche 1 bis 17, **dadurch gekennzeichnet, daß** der andere Spalt (21) abgewinkelt oder unsymmetrisch ausgebildet ist.

19. Meßvorrichtung nach einem der Ansprüche 1 bis 18, **dadurch gekennzeichnet, daß** der Rotor (14a) ein Kreissegment darstellt, das die Achse (11) umgreift.

20. Meßvorrichtung nach einem der Ansprüche 1 bis 19, **dadurch gekennzeichnet, daß** der als Kreissegment ausgebildete Rotor (14a) einen Winkel größer oder gleich dem des Permanentmagneten (15a) aufweist.

21. Meßvorrichtung nach einem der Ansprüche 1 bis 20, **dadurch gekennzeichnet, daß** das Kreissegment eine kreisförmige Außenkontur (60) aufweist, deren Mittelpunkt im Mittelpunkt M der Achse (11) liegt und daß das Kreissegment achssymmetrisch zu einer durch den Mittelpunkt M der Achse (11) verlaufenden Linie (S) ausgebildet ist.

22. Meßvorrichtung nach einem der Ansprüche 1 bis 21, **dadurch gekennzeichnet, daß** das Kreissegment (14a) zwei geradlinige Kanten aufweist.

23. Meßvorrichtung nach einem der Ansprüche 1 bis 22, **dadurch gekennzeichnet, daß** die Übergänge der Kanten des Rotors (14a) untereinander und der Kanten zu der kreisförmigen Außenkontur (60) abgerundet sind.

24. Drosselklappensensor oder Pedalwertgeber mit einer Meßvorrichtung nach einem der Ansprüche 1 bis 23, **dadurch gekennzeichnet, daß** der als Stator (16, 17) dienende Teil im Deckel (31) des Sensors (30) integriert ist, und daß der Deckel (31) aus Kunststoff besteht.

25. Drosselklappensensor oder Pedalwertgeber mit einer Meßvorrichtung nach einem der Ansprüche 1 bis 23, **dadurch gekennzeichnet, daß** der als Stator (16, 17) dienende Teil im Boden (40) des Sensors (30) integriert ist, und daß der Boden (40) aus Kunststoff besteht.

## Claims

1. Measurement apparatus for non-contacting detection of a rotation angle (α) between a stator (16, 17) and a rotor (14), with a permanent magnet (13) being arranged on the rotor (14), with an air gap being located between the stator (16, 17) and the rotor (14) and the stator comprising at least two segments (16, 17) which are separated by at least two magnetically impermeable gaps (21, 22), with at least one element (25) which is sensitive to magnetic fields being located in at least one gap (21), with at least one part (17) of the stator having no magnetically permeable connection to the rotor (14), **characterized in that** the shaft (11) of the rotor (14) has at least one area composed of magnetically permeable material, which runs at least from the rotor (14) to that part (16) of the stator which has a magnetically permeable connection to the rotor (14), and **in that** at least one first gap (22) is provided between the two parts (16, 17) of the stator, which impedes the magnetic flux of the permanent magnet (15) and controls it so that it runs via at least one of the other gaps (21), in which at least one element which is sensitive to magnetic fields is located.

2. Measurement apparatus according to Claim 1, **characterized in that** the first gap (22) is larger than the other gap (21).

3. Measurement apparatus according to Claim 1 and/or 2, **characterized in that** the shaft (11), in particular the projection (12), and the rotor (14) are composed of soft-magnetic material.

4. Measurement apparatus according to one of Claims 1 to 3, **characterized in that** a part (16) of the stator has a projection (19) into which the shaft (11), in particular its projection (12), projects.

5. Measurement apparatus according to Claim 4, **characterized in that** the projection (19) of the part (16) of the stator has a curved shape.

6. Measurement apparatus according to one of Claims 1 to 5, **characterized in that** the rotor and the stator are in the form of discs.

7. Measurement apparatus according to one of Claims 1 to 6, **characterized in that** the rotor is in the form of a segment.

8. Measurement apparatus according to one of Claims 1 to 7, **characterized in that** two other gaps (21) are provided, in each of which at least one Hall element (25) is arranged.

9. Measurement apparatus according to one of Claims 1 to 8, **characterized in that** the shaft (11) and the rotor (14) are integral.

10. Measurement apparatus according to one of Claims 1 to 9, **characterized in that** at least one recess (50) is formed in the part (16) of the stator at the junction from the first gap (21) to the other gap (22).

11. Measurement apparatus according to one of Claims 1 to 10, **characterized in that** the first gap (22) and the other gap (21) and the recess (50) are filled with air or with a magnetically impermeable material.

12. Measurement apparatus according to one of Claims 1 to 11, **characterized in that** the at least one recess (50) has a penetration depth of ≥ 15°.

13. Measurement apparatus according to one of Claims 1 to 12, **characterized in that** the width of the other gap (21) is less than the width of the recess (50).

14. Measurement apparatus according to one of Claims 1 to 13, **characterized in that** the width of the recess (50) corresponds to the width of the first gap (22).

15. Measurement apparatus according to one of Claims 1 to 14, **characterized in that** the recess (50) has a circular shape.

16. Measurement apparatus according to one of Claims 1 to 15, **characterized in that** another gap (21) is provided, having at least one element (25) which is sensitive to magnetic fields, and the other gap (22), which is located between the two parts (16, 17) of the stator, is larger than the other gap (21).

17. Measurement apparatus according to one of Claims 1 to 16, **characterized in that** a first recess (50) is provided at the junction from the other gap (21) to the gap (22), and **in that** a second recess (50) is formed diametrically opposite.

18. Measurement apparatus according to one of Claims 1 to 17, **characterized in that** the other gap (21) is angled or is formed asymmetrically.

19. Measurement apparatus according to one of Claims 1 to 18, **characterized in that** the rotor (14a) represents a circular segment, which surrounds the shaft (11).

20. Measurement apparatus according to one of Claims 1 to 19, **characterized in that** the rotor (14a), which is in the form of a circular segment, has an angle greater than or equal to that of the permanent magnet (15a).

21. Measurement apparatus according to one of Claims 1 to 20, **characterized in that** the circular segment has a circular external contour (60) whose centre point is located at the centre point M of the shaft (11), and **in that** the circular segment is formed symmetrically with respect to the axis, with respect to a line (S) which runs through the centre point M of the shaft (11).

22. Measurement apparatus according to one of Claims 1 to 21, **characterized in that** the circular segment (14a) has two straight-line edges.

23. Measurement apparatus according to one of Claims 1 to 22, **characterized in that** the junctions between the edges of the rotor (14a) and between the edges and the circular external contour (60) are rounded.

24. Throttle valve sensor or pedal position sensor having a measurement apparatus according to one of Claims 1 to 23, **characterized in that** that part which is used as the stator (16, 17) is integrated in the cover (31) of the sensor (30), and **in that** the cover (31) is composed of plastic.

25. Throttle valve sensor or pedal position sensor having a measuring apparatus according to one of Claims 1 to 23, **characterized in that** that part which is used as the stator (16, 17) is integrated in the base (40) of the sensor (30), and **in that** the base (40) is composed of plastic.

## Revendications

1. Dispositif de mesure pour la détection sans contact d'un angle de rotation (α) entre un stator (16, 17) et un rotor (14), le rotor (14) étant muni d'un aimant permanent (13), avec un intervalle d'air entre le stator (16, 17) et le rotor (14), le stator étant formé d'au moins deux segments (16, 17) séparés par au moins deux intervalles non conducteurs magnétiques (21, 22), avec au moins un élément magnéto-sensible (25), dans au moins un intervalle (21) et dont au moins une partie (17) du stator n'a pas de liaison de conduction magnétique avec le rotor (14),
**caractérisé en ce que**
l'axe (11) du rotor (14) comporte au moins une zone en une matière non conductrice d'aimantation allant au moins du rotor (14) jusqu'à la partie (16) du stator, cette partie ayant une liaison de conduction magnétique avec le rotor (14), et
au moins un premier intervalle (22) est prévu entre les deux pièces (16, 17) du stator, cet intervalle évitant le flux magnétique de l'aimant permanent (15) et étant commandé pour qu'il passe par au moins l'un des autres intervalles (21) dans lequel se trouve au moins un élément magnéto-sensible.

2. Dispositif de mesure selon la revendication 1,
**caractérisé en ce que**
le premier intervalle (22) est plus grand que l'autre intervalle (21).

3. Dispositif de mesure selon la revendication 1 et/ou 2,
**caractérisé en ce que**
l'arbre (11), notamment le prolongement (12) et le rotor (14) sont en une matière à aimantation douce.

4. Dispositif de mesure selon l'une des revendications 1 à 3,
**caractérisé en ce qu'**
une partie (16) du stator comporte un prolongement (19) dans lequel pénètre l'axe (11), notamment son prolongement (12).

5. Dispositif de mesure selon la revendication 4,
**caractérisé en ce que**
le prolongement (19) de la partie (16) du stator est de forme courbe.

6. Dispositif de mesure selon l'une des revendications 1 à 5,
**caractérisé en ce que**
le rotor et le stator ont une forme de disque.

7. Dispositif de mesure selon l'une des revendications 1 à 6,
**caractérisé en ce que**
le rotor est réalisé sous la forme d'un segment.

8. Dispositif de mesure selon l'une des revendications 1 à 7,
**caractérisé par**
deux autres intervalles (21) recevant chacun au moins un élément Hall (25).

9. Dispositif de mesure selon l'une des revendications 1 à 8,
**caractérisé en ce que**
l'axe (11) et le rotor (14) sont en une seule pièce.

10. Dispositif de mesure selon l'une des revendications 1 à 9,
**caractérisé en ce qu'**
au passage du premier intervalle (21) vers l'autre intervalle (22), la partie (16) du stator comporte au moins une cavité (50).

11. Dispositif de mesure selon l'une des revendications 1 à 10,
**caractérisé en ce que**
le premier intervalle (22), l'autre intervalle (21) et la cavité (50) sont remplis d'air ou d'une matière non conductrice d'aimantation.

12. Dispositif de mesure selon l'une des revendications 1 à 11,
**caractérisé en ce qu'**
au moins une cavité (50) a une profondeur de pénétration ≥ 15°.

13. Dispositif de mesure selon l'une des revendications 1 à 12,
**caractérisé en ce que**
la largeur de l'autre intervalle (21) est inférieure à la largeur de la cavité (50).

14. Dispositif de mesure selon l'une des revendications 1 à 13,
**caractérisé en ce que**
la largeur de la cavité (50) correspond à la largeur du premier intervalle (22).

15. Dispositif de mesure selon l'une des revendications 1 à 14,
**caractérisé en ce que**
la cavité (50) a une forme de cercle.

16. Dispositif de mesure selon l'une des revendications 1 à 15,
**caractérisé par**
un autre intervalle (21) avec au moins un élément magnéto-sensible (25) et l'intervalle restant (22), entre les deux parties (16, 17) du stator, est plus grand que l'autre intervalle (21).

17. Dispositif de mesure selon l'une des revendications 1 à 16,
**caractérisé en ce qu'**
au passage de l'autre intervalle (21) vers l'intervalle (22) on a une première cavité (50) et diamétralement en regard on a une seconde cavité (50).

18. Dispositif de mesure selon l'une des revendications 1 à 17,
**caractérisé en ce que**
l'autre intervalle (21) est recourbé ou non symétrique.

19. Dispositif de mesure selon l'une des revendications 1 à 18,
**caractérisé en ce que**
le rotor (14a) représente un segment de cercle entourant l'axe (11).

20. Dispositif de mesure selon l'une des revendications 1 à 19,
**caractérisé en ce que**
le rotor (14a) en forme de segment de cercle présente un angle supérieur ou égal à l'aimant permanent (15a).

21. Dispositif de mesure selon l'une des revendications 1 à 20,
**caractérisé en ce que**
le segment de cercle a un contour extérieur de forme circulaire (60) dont le centre est situé au centre M de l'axe (11), et
le segment de cercle est symétrique suivant une symétrie axiale par rapport à une ligne (S) passant par le centre M de l'axe (11).

22. Dispositif de mesure selon l'une des revendications 1 à 21,
**caractérisé en ce que**
le segment de cercle (14a) présente deux arêtes droites.

23. Dispositif de mesure selon l'une des revendications 1 à 22,
**caractérisé en ce que**
les jonctions des arêtes du rotor (14a) entre elles et les arêtes vers le contour extérieur circulaire (60) sont arrondies.

24. Capteur de volet d'étranglement ou de position de pédale comportant un dispositif de mesure selon l'une des revendications 1 à 23,
**caractérisé en ce que**
la pièce servant de stator (16, 17) est intégrée dans le couvercle (31) du capteur (30) et le couvercle (31) est en matière plastique.

25. Capteur de volet d'étranglement ou capteur de la position d'une pédale comportant un dispositif de mesure selon l'une des revendications 1 à 23,
**caractérisé en ce que**
la partie servant de stator (16, 17) est intégrée dans le fond (40) du capteur (30) et le fond (40) est en matière plastique.
